# EUROPÄISCHE PATENTSCHRIFT

(11) **EP 1 752 389 B1**
(45) Veröffentlichungstag und Bekanntmachung des Hinweises auf die Patenterteilung: **11.08.2010**
(21) Anmeldenummer: 06403001.8
(22) Anmeldetag: 11.08.2006
(51) Int. Cl.: B65D 75/58, B65D 33/00

(54) **Verpackung mit einer Schwächelinie und Verfahren zur Herstellung derselben**
Package comprising a weakening line and method to produce it
Emballage comportant une ligne d'affaiblissement et procédure pour sa production

(30) Priorität: 12.08.2005 DE 102005038642
(43) Veröffentlichungstag der Anmeldung: 14.02.2007
(73) Patentinhaber: JENOPTIK Automatisierungstechnik GmbH, 07745 Jena (DE)
(72) Erfinder: Krug, Michael, 07747 Jena (DE); Preuß, Norbert, 07743 Jena (DE); Wollmann, Werner, 07747 Jena (DE)
(74) Vertreter: Schaller, Renate

(56) Entgegenhaltungen:
- EP-A- 0 540 184
- FR-A1- 2 757 835

## Beschreibung

Die Erfindung betrifft eine Verpackung mit einer Schwächelinie, die aus im Abstand hintereinander angeordneten Sacklöchern besteht und ein Verfahren zur Erzeugung einer solchen Schwächelinie in eine Verpackung.

Ein gattungsgemäßes Verfahren und eine gattungsgemäße Verpackung sind aus der Patentschrift EP 0 954 474 B1 bekannt.

Eine erfindungsgemäße Verpackung ist besonders geeignet, wenn beim Öffnen der Verpackung entlang der Schwächelinie ein deutlich akustisch wahrnehmbares Geräusch erzeugt werden soll.

Aus dem Stand der Technik sind eine Vielzahl von Verpackungen mit Schwächelinie bekannt, auch solche, die aus im Abstand hintereinander angeordneten Sacklöchern bzw. Ausnehmungen bestehen. Insbesondere um Objekte luftdicht zu verpacken, durchdringen die Sacklöcher bzw. Ausnehmungen das Verpackungsmaterial nicht vollständig. Durch die Abstände der Sacklöcher (Stegbreite) und deren Tiefe lässt sich die notwendige Aufreißkraft variieren.

Insbesondere Verpackungen für Lebensmittel bestehen in der Regel aus einem mehrschichtigen Materialabbau, um durch die verschiedenen Schichten alle funktionellen Anforderungen an die Verpackung, wie z. B. Steifigkeit, Reißfestigkeit, Dichtheit gegen Wasserdampf und Lichtdichtigkeit, zu erfüllen. Dabei kommen Schichten aus Kunststoff, Metall oder Papier zur Anwendung.
Die Papier- oder auch Papp- bzw. Kartonschicht bildet in der Regel die äußerste Schicht, wenn man darauf sich befindende, eine optische Wirkung bezweckende Schichten (z. B. Farbschicht, Lackschicht oder Kunststoffschicht) vernachlässigt, gefolgt von einer Metallschicht, in der Regel aus Aluminium, die zwischen diversen Kunststoffschichten eingebettet ist.

Für das Einbringen von Sacklöchern in den vorgefertigten mehrschichtigen Materialaufbau ist als mechanisches Verfahren das Schälen geeignet. Die Umfangsfläche solcher Löcher wird durch die Form des Schälmessers und dessen Vorschub bestimmt. Im Querschnitt längs zur Bearbeitungsrichtung entspricht die Lochform einem Kreisabschnitt, d.h., dass die Stegbreiten zwischen den einzelnen Löchern mit zunehmender Tiefe breiter werden.

Ebenfalls bekannt ist es, in einen vorgefertigten mehrschichtigen Materialaufbau Sacklöcher mittels Laser einzubringen. Um tatsächlich Sacklöcher anstelle von durchgehenden Löchern zu erzeugen, werden unter Beachtung der unterschiedlichen Materialien mit einem unterschiedlichen Absorptionsverhalten die Laserparameter, wie Wellenlänge, Leistung und Pulsregime gewählt. Gezielt werden für die einzelnen Schichten unter den jeweils eine spezielle Funktion erfüllenden Materialien die ausgesucht, die für den Bearbeitungslaser absorbierend sind.
Als Bearbeitungslaser kommt insbesondere ein CO₂-Laser in Frage, für dessen Emissionswellenlänge von 10,6 µm Papier und eine Vielzahl von Kunststoffen stark absorbierend ist.
Die Lochform eines mit Laser geschaffenen Sackloches, dessen Tiefe durch den Energieeintrag bestimmt wird, ähnelt grundsätzlich einer Parabel bzw. dem Profil einer Gauß'schen Glockenkurve. In jedem Fall werden auch hier die Stegbreiten mit zunehmender Tiefe breiter.

Beide beschriebenen Technologien zum Einbringen von Sacklöchern in einen vorgefertigten mehrschichtigen Materialaufbau einer Verpackung erzeugen eine Schwächelinie durch Materialabtrag, die beim gezielten Aufreißen dieser Verpackung entlang der Schwächelinie geräuscharm ist.

Ein Verfahren zur Herstellung einer Verpackung aus einem mehrschichtigen Materialaufbau, umfassend zwei Plastikschichten, zwischen die eine Metallschicht eingebettet ist, in dem mittels Laser Sacklöcher bis hin zur Metallschicht eingebracht werden, die eine Vortrennlinie (Schwächelinie) bilden, ist aus der Patentschrift EP 0 954 474 B1 bekannt.
Die in diesem Verfahren erzeugten Sacklöcher haben eine konische Lochform, wie sie für Sacklöcher mittels Laser im aufgezeigten Stand der Technik als typisch beschrieben ist. Durch die konische Lochform ändert sich die Stegbreite zwischen zwei Sacklöchern allmählich, sodass keine abrupten Materialdickensprünge entlang der Schwächelinie entstehen. Die Erzeugung dieser Sacklöcher als Mikroperforationen wird ausdrücklich als von Vorteil beschrieben, um die Stabilität der Verpackung nicht zu beeinträchtigen und die Metallschicht zu schützen.

Die Patentschrift EP 0 954 474 B1 offenbart auch eine Verpackung aus einer oder zwei strahlungsabsorbierenden Innenschichten, die eine Folge von Mikroperforationslöchern aufweisen, gefolgt von einer Metallschicht und einer Außenschicht (Oberflächenschicht).

Es ist die Aufgabe der Erfindung, eine Verpackung bestehend aus einem mehrschichtigen Materialaufbau und einer Schwächelinie zum Aufreißen der Verpackung zu schaffen, die beim Aufreißen ein deutlich hörbares Geräusch erzeugt.
Ebenfalls Aufgabe ist es, ein Verfahren zur Herstellung einer erfindungsgemäßen Verpackung zu schaffen.

Diese Aufgabe wird für eine Verpackung gemäß Anspruch 1 und für ein Verfahren gemäß Anspruch 7 gelöst. Vorteilhafte Ausführungen sind in den Unteransprüchen offenbart.

Mit der erfindungsgemäßen Lösung ist es möglich, Verpackungen zu schaffen, die sowohl allen permanenten Anforderungen an eine Verpackung gerecht werden, wie luft- und feuchtigkeitsdicht, steif bzw. flexibel, reißfest, und mit einer den Kunden optisch ansprechenden Oberfläche, als auch beim Aufreißen der zur Öffnung vorgesehenen Schwächelinie ein deutlich wahrnehmbares Geräusch erzeugen.

Für das erfindungsgemäße Verfahren ist es wesentlich, dass die Tiefe der Sacklöcher, die mittels Laser erzeugt werden, nicht allein durch die Laserparameter und die Materialparameter der zu durchdringenden Materialschichten bestimmt werden, sondern die Tiefe durch das Auftreffen auf eine eingebettete, die Laserstrahlung reflektierende Materialschicht (Reflexionsschicht) bestimmt wird und der Laser beim ersten Auftreffen des Laserstrahls auf die Reflexionsschicht nicht abgeschalten wird, sondern weiter einwirkt, bis der Lochboden eine deutliche Ausdehnung erfahren hat bis gleich der Ausdehnung des Sackloches an der äußeren Oberfläche der Verpackung.

Für die erfindungsgemäße Verpackung ist es wesentlich, dass die Zunahme der Stegbreiten zwischen den Sacklöchern über die Sacklochtiefe verringert wird, so dass an den Übergängen zwischen den Sacklöchern und den Stegen ein deutlicher Materialdickensprung entsteht. Je größer und abrupter dieser Materialdickensprung ist, desto hörbarer wird das Geräusch, welches beim Aufreißen der Schwächelinie und damit Überwindung der Materialdickensprünge erzeugt wird. Um also ein möglichst lautes Geräusch zu erzeugen, sollte die Reflexionsschicht möglichst fern der äußeren Oberfläche der Verpackung im Schichtaufbau eingebettet sein. Materialschichten mit einer hohen Materialfestigkeit sollten möglichst in Bezug auf die äußere Oberfläche der Verpackung vor der Reflexionsschicht angeordnet sein, so dass eine möglichst große Differenz zwischen dem Aufreißwiderstand der Stege und dem Aufreißwiderstand der unterhalb des Sacklochbodens verbleibenden Materialdicke (Restwand) entsteht. Der Aufreißwiderstand über die Schwächelinie kann, da die Sacklochtiefe vorgegeben ist, nur über den Lochabstand und damit über die Stegbreiten beeinflusst werden.

Die Erfindung soll nachstehend anhand von Ausführungsbeispielen näher erläutert werden. Die Zeichnungen zeigen:

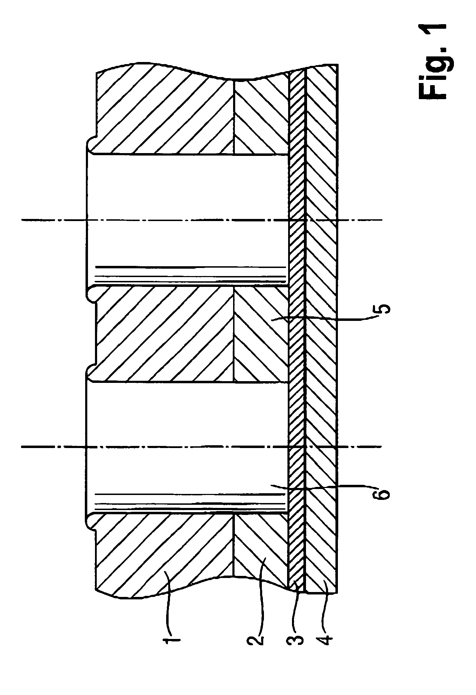

- Fig. 1:: eine Prinzipdarstellung eines Schnittbildes durch eine erfindungsgemäße Verpackung

Fig. 1 zeigt den Mehrschichtaufbau einer aus vier Schichten bestehenden Verpackung, in die mittels Laser eine Reihe von durch Stegen 5 getrennte Sacklöcher 6 eingebracht wurden. Die Sacklöcher 6 erstrecken sich durch eine Oberflächenschicht 1, die z.B. aus einem Polypropylen (PP) besteht und eine zweite Schicht 2, z. B. eine Polyäthylenschicht (PE) bis auf die Oberfläche einer Reflexionsschicht 3, z. B. aus Aluminium. Der Reflexionsschicht 3 folgt eine vierte Schicht 4, z. B. aus PE.
In der Regel haben alle Schichten, oder alle Schichten ausgenommen die Reflexionsschicht 3, eine bestimmte Funktion, die durch den Mehrschichtaufbau für die Verpackung erfüllt werden muss.
Für die Erfindung sind die Funktionen und damit auch die konkreten, eine entsprechende Funktion erfüllenden Materialien, nicht von Bedeutung.
Die Materialien müssen lediglich für eine gleiche Laserstrahlung hinreichend absorbierend sein, sofern die betreffende Materialschicht in Bezug auf die äußere Oberfläche der Verpackung vor der Reflexionsschicht 3 angeordnet ist. Gemäß diesem Beispiel wären das die Oberflächenschicht 1 und die zweite Schicht 2. Die Reflexionsschicht 3 ist für diese Laserstrahlung hoch reflektierend.

Im Unterschied zu bekannten Laserabtragsverfahren, in denen die Abtragstiefe allein durch den Energieeintrag bestimmt ist, also ungehindert erfolgt, wird die Abtragstiefe durch die Lage der Reflexionsschicht 3 innerhalb des Mehrschichtaufbaus definiert. Die Einwirkung der Laserstrahlung wird jedoch nicht beendet, sobald die Laserstrahlung auf die Reflexionsschicht 3 auftrifft, sondern eine vorgegebene Zeit fortgesetzt. Dadurch verändert sich die Form der Sacklöcher 6. Insbesondere erfolgt ein sich radial ausdehnender Materialabtrag in der zweiten Schicht 2, auf der Reflexionsschicht 3, am Boden der Sacklöcher 6. Die dadurch frei gelegten Flächen auf der Reflexionsschicht 3 werden mit zunehmendem Energieeintrag größer. Sobald die Ausdehnung dieser freien Flächen der Ausdehnung der Sacklöcher 6 an der Oberfläche der Verpackung entspricht oder solche Ausdehnung nahezu erreicht, wird der Energieeintrag durch Einwirkung von Laserstrahlung beendet.

Die Sacklöcher können mit einem ungeregelten Laser erzeugt werden, da Schwankungen des Abtragsvolumens aufgrund der festen Abtragstiefe eine nur zu vernachlässigende Auswirkung auf die Konstanz der Aufreißkraft haben, die in der Regel für eine solche Schwächelinie gefordert wird.
Bei einem ungeregelten Laser wird man über Versuche die optimalen Verfahrensparameter für ein optimales Sackloch 6 ermitteln.

Vorteilhaft ist es jedoch, den Laser zu regeln, d.h. das Auftreffen der Laserstrahlung auf die Reflexionsschicht 3 mit einem Sensor zu erfassen und den anschließenden weiteren Energieeintrag in das jeweilige Sackloch über die Laserleistung oder die Strahlungsdauer bzw. die Pulszahl so zu begrenzen, dass ein optimales Sackloch 6 entsteht. Mit dieser Regelung werden Parameterschwankungen bis zum Auftreffen der Laserstrahlung auf die Reflexionsschicht wirkungsfrei für das jeweils entstehende Sackloch 6.
Die Verfahrensparameter werden so optimiert, dass der Breitenzuwachs der Stege, der bis zum Auftreffen der Laserstrahlung auf die Reflexionsschicht 3 entsteht, abgetragen wird, so dass die Breite der Stege über die Sacklochtiefe möglichst konstant ist.
Bei der Verfahrensoptimierung wird vorteilhaft auch darauf geachtet, dass um den Sacklochrand eine Schmelzwulst entsteht.

### Bezugszeichenliste

- 1: Oberflächenschicht
- 2: Zweite Schicht
- 3: Reflexionsschicht
- 4: Vierte Schicht
- 5: Stege
- 6: Sacklöcher

## Patentansprüche

1. Verpackung, bestehend aus einem mehrschichtigen Materialaufbau, mit einer Schwächelinie, die durch eine linienförmige Aneinanderreihung von durch Stege (5) getrennten, durch Einwirkung von Laserstrahlung hergestellten, Sacklöchern (6) gebildet wird,
wobei der mehrschichtige Materialaufbau aus wenigstens einer eine Laserstrahlung absorbierenden Schicht und einer diese Laserstrahlung reflektierenden Schicht besteht und
sich die Sacklöcher (6) durch die absorbierenden Schichten bis zur reflektierenden Schicht erstrecken, **dadurch gekennzeichnet,**
**dass** eine absorbierende Schicht eine Oberflächenschicht (1) der Verpackung bildet und
**dass** die Sacklöcher in der Oberflächenschicht eine gleiche Ausdehnung aufweisen wie die Sacklochböden, sodass die Stegbreiten über die Tiefen der Sacklöcher (6) konstant sind, wodurch abrupte Materialdickensprünge entlang der Schwächelinie entstehen, deren Überwindung beim Aufreißen der Schwächelinie ein deutlich wahrnehmbares Geräusch erzeugt.

2. Verpackung nach Anspruch 1, **dadurch gekennzeichnet,**
**dass** die Materialschichten mit hoher Reißfestigkeit in Bezug auf die Oberflächenschicht (1) vor der Reflexionsschicht (3) angeordnet sind.

3. Verpackung nach Anspruch 1, **dadurch gekennzeichnet,**
**dass** alle Materialschichten, die nicht funktionsbedingt in Bezug auf die Oberfläche der Verpackung der Reflexionsschicht (3) nachgeordnet werden müssen, dieser vorgeordnet sind.

4. Verpackung nach Anspruch 1, **dadurch gekennzeichnet,**
**dass** die Reißfestigkeit der Stege (5) im Verhältnis zur Reißfestigkeit der Schwächelinie möglichst hoch und die Reißfestigkeit des unterhalb der Sacklochböden verbleibenden Materials zur Reißfestigkeit der Schwächelinie möglichst gering ist, um eine maximal mögliche Reißfestigkeits-Differenz zwischen den Stegen (5) und den Restwänden zu erreichen, um die erreichbare Lautstärke des Geräusches zu erhöhen.

5. Verpackung nach einem der vorangehenden Ansprüche, **dadurch gekennzeichnet,**
**dass** die Sacklöcher (6) mittels Laser erzeugt werden, wodurch um den Rand der Sacklöcher (6) eine Schmelzwulst entsteht, die zur Erhöhung der Reißfestigkeit der Stege (5) beiträgt.

6. Verfahren zum Herstellen einer Schwächelinie in eine Verpackung, bestehend aus wenigstens einer eine Laserstrahlung absorbierenden Schicht und einer diese Laserstrahlung reflektierenden Schicht, indem eine Laserstrahlung, auf die wenigstens eine absorbierende Schicht gerichtet, entlang der vorgesehenen Schwächelinie relativ zur Verpackung geführt wird, so dass eine linienförmige, von Stegen (5) getrennte Aneinanderreihung von Sacklöchern (6) entsteht, **dadurch gekennzeichnet,**
**dass** die wenigstens eine absorbierende Schicht eine Oberflächenschicht (1) ist und die Laserstrahlung nach Auftreffen auf die Reflexionsschicht (3) weiter einwirkt, bis der Sacklochboden eine Ausdehnung erfahren hat, die der Ausdehnung des Sackloches (6) in der Oberflächenschicht (1) entspricht, wodurch abrupte Materialdickensprünge entlang der Schwächelinie entstehen, die beim Aufreißen der Schwächelinie ein Geräusch verursachen.

7. Verfahren nach Anspruch 6, **dadurch gekennzeichnet,**
**dass** die Einwirkung der Laserstrahlung nach dem Auftreffen auf die Reflexionsschicht (3) um eine vorgegebene Zeit fortgesetzt wird.

## Claims

1. A package consisting of a multi-layer material structure and comprising a weakening line which is formed by a line-shaped sequence of blind holes (6) produced by the effect of laser radiation and separated by webs (5), said multi-layer material structure consisting of at least one layer that absorbs laser radiation and one layer that reflects said laser radiation, and said blind holes (6) extending through the absorbing layers as far as the reflecting layer, **characterised in that**
one absorbing layer forms a surface layer (1) of the package, and
the blind holes in the surface layer have the same size as the blind hole bottoms, so that the width of the webs remains constant over the depth of the bind holes (6), which results in abrupt variations in material thickness along the weakening line, and advancing past these variations in thickness by tearing along the weakening line generates a clearly audible sound.

2. Package according to claim 1, **characterised in that** the material layers with high tear resistance are arranged in front of the reflecting layer (3) with respect to the surface layer (1).

3. Package according to claim 1, **characterised in that** all material layers whose function does not require them to be arranged after the reflecting layer (3) with respect to the surface of the package are arranged in front of the reflecting layer (3).

4. Package according to claim 1, **characterised in that** the tear resistance of the webs (5) is as high as possible in relation to the tear resistance of the weakening line and the tear resistance of the material remaining below the blind hole bottoms is as low as possible in relation to the tear resistance of the weakening line so as to achieve the maximum possible difference in tear resistance between the webs (5) and the residual walls and thereby increase the achievable loudness of the tearing sound.

5. Package according to any one of the preceding claims, **characterised in that** the blind holes (6) are formed by laser, creating a bead of molten material around the edge of the blind holes (6) which contributes towards increasing the tear resistance of the webs (5).

6. Method for forming a weakening line in a package consisting of at least one layer that absorbs laser radiation and one layer that reflects said laser radiation, which method comprises guiding a laser beam, directed to the at least one absorbing layer, along the intended weakening line relative to the package, so that a line-shaped sequence of blind holes (6) is produced which are separated by webs (5),
**characterised in that** the at least one absorbing layer is a surface layer (1) and the effect of the laser beam continues after impinging on the reflecting layer (3) until the blind hole bottom has been enlarged to the size of the blind hole (6) in the surface layer (1), thereby forming abrupt variations in material thickness along the weakening line which cause a sound when tearing apart the weakening line.

7. Method according to claim 6, **characterised in that** the effect of the laser beam is made to continue for a predetermined time after its impingement on the reflecting layer (3).

## Revendications

1. Emballage à structure multicouches, comportant une ligne d'affaiblissement qui est formée par une séquence linéaire de trous borgnes (6) produits par l'effet d'un rayonnement laser et séparés les uns des autres par des âmes (5),
ladite structure multicouches consistant d'au moins une couche qui absorbe un rayonnement laser et une couche qui réfléchit ledit rayonnement laser, et
lesdits trous borgnes (6) traversant lesdites couches absorbantes jusqu'à ladite couche réfléchissante,
**caractérisé en ce que**
l'une des couches absorbantes constitue une couche de surface (1) dudit emballage, et
que chaque trous borgne dans la couche de surface présente la même étendue que son fond, de sorte que la largeur desdites âmes soit constante sur toute la profondeur des trous borgnes (6), ce qui produit des variations abruptes de l'épaisseur du matériau selon la ligne d'affaiblissement, le franchissement desdites variations d'épaisseur lors d'un déchirement selon la ligne d'affaiblissement produisant un bruit nettement audible.

2. Emballage selon la revendication 1, **caractérisé en ce que** les couches de matériau qui présentent une haute résistance au déchirement sont disposées avant la couche réfléchissante (3) par rapport à ladite couche de surface (1).

3. Emballage selon la revendication 1, **caractérisé en ce que** toutes les couches de matériau dont la fonction n'exige pas leur disposition après la couche réfléchissante (3) par rapport à la surface dudit emballage, sont disposées avant ladite couche réfléchissante (3).

4. Emballage selon la revendication 1, **caractérisé en ce que** les âmes (5) présentent une résistance au déchirement qui est maximale par rapport à la résistance au déchirement de la ligne d'affaiblissement et que le matériau résiduel au-dessous des fonds des trous borgnes présente une résistance au déchirement qui est minimale par rapport à la résistance au déchirement de la ligne d'affaiblissement de manière à obtenir une différence maximale en résistance au déchirement entre les âmes (5) et les parois résiduelles pour ainsi augmenter le volume maximal du bruit de déchirement.

5. Emballage selon l'une quelconque des revendications précédentes, **caractérisé en ce que** les trous borgnes (6) sont réalisés par laser, formant en même temps un bourrelet en matériau fondé autour de la périphérie des trous borgnes (6), lequel contribue à augmenter la résistance au déchirement des âmes (5).

6. Procédé destiné à produire une ligne d'affaiblissement dans un emballage consistant d'au moins une couche qui absorbe un rayonnement laser et une couche qui réfléchit ledit rayonnement laser, dans lequel procédé un rayonnement laser, dirigé vers ladite au moins une couche absorbante, est guidé selon la ligne d'affaiblissement prévue par rapport audit emballage, de manière à produire une séquence linéaire de trous borgnes (6) séparés les uns des autres par des âmes (5),
**caractérisé en ce que** ladite au moins une couche absorbante est une couche de surface (1) et que l'effet dudit rayonnement laser continue après son incidence sur la couche réfléchissante (3) jusqu'à ce que le fond du trous borgne présente la même étendue que le trou borgne (6) dans la couche de surface (1), de manière a produire des variations abruptes de l'épaisseur du matériau selon la ligne d'affaiblissement qui produisent un bruit lors d'un déchirement de la ligne d'affaiblissement.

7. Procédé selon la revendication 6, **caractérisé en ce que** l'effet du rayonnement laser est continue pendant un temps prédéterminé après son incidence sur la couche réfléchissante (3).
